# EUROPÄISCHE PATENTANMELDUNG

(11) **EP 3 269 546 A1**
(43) Veröffentlichungstag der Anmeldung: **17.01.2018**
(21) Anmeldenummer: 16179263.5
(22) Anmeldetag: 13.07.2016
(51) Int. Cl.: B32B 17/10, C03C 27/12, H05B 3/84

(54) **BEHEIZTES GLAS**

(71) Anmelder: Saint-Gobain Glass France, 92400 Courbevoie (FR)
(72) Erfinder: PELZER, Michael, 52477 Alsdorf (DE); KOWALKE, Olaf, 52353 Düren-Arnoldsweiler (DE)
(74) Vertreter: Frei Patent Attorneys

(57) **Zusammenfassung**

Eine beheizbare, transparente Brandschutzsicherheitsverglasung 1 für Marineanwendungen weist ein erstes, hoch vorgespanntes Flächenelement 2 und ein zweites Flächenelement 3 sowie eine elektrisch leitendes Element 4 auf. Das erste und zweite Flächenelement 2,3 weist je zwei im Wesentlichen parallele grosse Flächen auf, welche auch als Flachseiten bezeichnet werden. Das elektrisch leitende Element 4 ist auf einer Flachseite des ersten oder zweiten Flächenelementes 2,3 angeordnet. Die Brandschutzsicherheitsverglasung 1 ist als monolithische Verbundsicherheitsverglasung ausgestaltet und das elektrisch leitende Element 4 ist zwischen dem ersten Flächenelement 2 und den zweiten Flächenelement 3 angeordnet. Die Brandschutzsicherheitsverglasung 1 ist im Brandfall mindestens 20 Minuten raumabschliessend also feuerresistent. Daher ist die Brandschutzsicherheitsverglasung 1 nicht nur beheizbar sondern auch feuerresistent, wobei diese beiden Eigenschaften nicht aus einer einfachen Kombination sondern vielmehr aus einer Integration der Feuerresistenz in die beheizbare Brandschutzsicherheitsverglasung resultiert.

## Beschreibung

Die Erfindung bezieht sich auf eine beheizbare Brandschutzsicherheitsverglasung und ein Verfahren zur Herstellung einer beheizbaren Brandschutzsicherheitsverglasung gemäss dem Oberbegriff der entsprechenden unabhängigen Patentansprüche.

Beheizbares Glas bzw. eine beheizbare Verglasungseinheit mit einem eingebetteten Draht kann unter anderem in Autos als beheizbare Frontscheibe und/oder Heckscheibe eingesetzt werden und ist auch für die Verwendung in der Seefahrt bekannt.

Beheizte Gläser können beispielsweise auf der Brücke eines Schiffs zu jeder Zeit für optimale Sichtverhältnisse sorgen, indem sie ein Beschlagen der Brückenverglasung verhindern. Außerdem erhöhen sie den Komfort, da sie das Eindringen von Kälte durch das Glas verhindern und für eine angenehm warme Umgebung im Ruderhaus für die Crew sorgen. Auch sind beheizbare Isoliergläser in Bauanwendungen bekannt, die aufgrund der Isolierfunktion mit einem zusätzlichen, gasgefüllten Scheibenzwischenraum ausgestattet sind, wodurch die Verglasung relativ dick ist.

Um die Besatzung, beispielsweise auf der Brücke des Schiffes bzw. die Bewohner eines Hauses bzw. die Insassen eines Fahrzeugs, im Brandfall vor Flammen und giftigen Gasen zu schützen und so die Sicherheit der Crew bzw. die Bewohner zu gewährleisten ist es wünschenswert, dass eine Verglasung auch vor dem Durchbruch von Feuer schützen. Solche Verglasungen werden auch als feuerresistente Verglasungen oder Brandschutzverglasungen bezeichnet.

Feuerresistente Verglasungen sind beispielsweise aus WO 2009/111 897 bekannt, bei denen eine im Brandfall eintrübende Brandschutzschicht auf Siliziumdioxidbasis zwischen zwei Glasscheiben angeordnet ist. Solche Brandschutzverglasungen mit Brandschutzschicht sind jedoch relativ schwer und daher insbesondere im maritimen Einsatzbereich eher unvorteilhaft. Des Weiteren ist aus WO 96/01792 bekannt, dass die Widerstandszeiten von Verglasungen im Brandfall, also die Feuerwiderstandszeit, mit Hilfe von aufwändigen Kombinationen in einem Verbund von Glasscheiben, also als Aufbau von Verbundgläsern, und durch aufwändige Rahmenhalterungen erreicht werden können.

Die Feuerresistenz einer Verglasung im Brandfall bewirkt einen Schutz vor Feuer, also Flammen und giftigen Dämpfen. Die Brandschutzeigenschaften einer Verglasung können gemäss der Norm EN 13501 (Stand Dezember 2013) für Bauanwendungen oder IMO FTP code 2010 für Marineanwendungen klassifiziert werden. Es werden beispielsweise bei Gebäuden, also für Bauanwendungen, bzw. für Marineanwendungen unter anderem die folgenden Klassen für Brandschutzverglasungen unterschieden:
Klassifikation E (Raumabschluss) für Bauanwendungen bzw. A für Marineanwendungen spezifiziert raumabschliessende Brandschutzsicherheitsverglasungen, danach, wie lange sie eine Dichtigkeit gegenüber Rauch und Heissgasen gewährleisten. Raumabschliessend in diesem Sinne bedeutet Dichtheit gegenüber Rauch und Heissgas und damit auch gegen Feuer.
Klassifikation EI (Raumabschluss & Isolation) für Bauanwendungen bzw. B für Marineanwendungen spezifiziert raumabschliessende Konstruktionselemente, also eine Brandschutzsicherheitsverglasung, danach, wie lange sie die Anforderungen an die Klasse E erfüllen und zusätzlich eine Isolation gegen Hitzeeinwirkung (Strahlung, Wärmeleitung) bilden, indem während der Feuerwiderstandsdauer der mittlere Temperaturanstieg auf der Kaltseite 140 K und der maximale Temperaturanstieg auf der Kaltseite <180 K nicht überschritten werden darf.

Prinzipiell werden Brandschutzzeiten, auch Feuerwiderstandsdauer bzw. -zeit genannt, in Minuten angegeben, wobei mindestens eine Feuerresistenz, also ein Brandschutz, unabhängig von der Klassifizierung mindestens 10 Minuten aufrechterhalten werden muss. Elemente die nicht mindestens 10 Minuten raumabschliessend sind und somit nicht die Minimalkriterien für eine Klassifizierung erfüllen, können nicht als Brand- oder Feuerschutzelemente bezeichnet werden und sind somit nicht als feuerresistent bzw. feuerhemmend, brandschützend zu betrachten.

WO 2013/178369 offenbart einen Dünnschichtheizkörper für Wohnräume. An den Dünnschichtheizkörper werden keinen feuerresistenten bzw. Brandschutzanforderung gestellt. Vielmehr erfüllt die in WO 2013/178369 offenbarte elektrische Heizung ausschliesslich eine Heizfunktion und definitionsgemäss keine Brandschutzfunktion.

Es ist die Aufgabe der Erfindung, eine verbesserte, beheizbare Brandschutzsicherheitsverglasung zu schaffen,. Es kann die Aufgabe der Erfindung sein eine beheizbare Brandschutzsicherheitsverglasung zu schaffen, die klare Sicht sowie einen Brandschutz bei einer Marineanwendung oder Bauanwendung bietet. Es kann eine weitere Aufgabe der Erfindung sein eine einfach herstellbare beheizbare Brandschutzsicherheitsverglasung bereitzustellen, insbesondere wobei die bereitgestellte Brandschutzsicherheitsverglasung vorzugsweise leicht und dünn ist.

Mindestens eine dieser Aufgaben löst eine Brandschutzsicherheitsverglasung und eine Verfahren zur Herstellung einer Brandschutzsicherheitsverglasung mit den Merkmalen der entsprechenden unabhängigen Patentansprüche.

Eine transparente Verbundsicherheitsverglasungseinheit mit Brandschutz- und Heizfunktion, also die beheizbare Brandschutzsicherheitsverglasung, insbesondere für Marine-, Fahrzeug und/oder Bauanwendungen, weist ein erstes hoch vorgespanntes Flächenelement und ein zweites Flächenelement sowie eine elektrisch leitendes Element auf. Mindestens das erste Flächenelement ist hoch bzw. stark vorgespannt. Das erste und zweite Flächenelement ist je scheibenförmig ausgestaltet und weist je zwei im Wesentlichen parallele grosse Flächen auf, welche auch als Flachseiten bezeichnet werden. Das elektrisch leitende Element ist auf einer Flachseite des ersten Flächenelementes oder auf einer Flachseite des zweiten Flächenelements angeordnet. Die Brandschutzsicherheitsverglasung ist als monolithische Brandschutzsicherheitsverglasung, auch Verbundsicherheitsverglasung genannt, ausgestaltet und das elektrisch leitende Element ist zwischen den beiden Flächenelementen, also zwischen dem ersten Flächenelement und dem zweiten Flächenelement angeordnet. Die Brandschutzsicherheitsverglasung ist im Brandfall mindestens 20 Minuten raumabschliessend, also feuerresistent. Daher ist die Brandschutzsicherheitsverglasung nicht nur über das elektrisch leitende Element beheizbar sondern auch feuerresistent, wobei diese beiden Eigenschaften gemeinsam in die beheizbare Brandschutzsicherheitsverglasung integriert sind.

Die umlaufenden Oberflächenbereiche des Flächenelementes zwischen den Flachseiten werden im vorliegenden Text Stirnseiten genannt, die Stirnseiten können auch als "Kante" oder "Schmalseite`` des Flächenelementes bezeichnet werden. Dabei weist die Stirnseite eine kleinere Fläche auf als die Flachseiten und eine Ausdehnung der Stirnseite senkrecht zu den grossen Flächen, also senkrecht zu den Flachseiten, entspricht der Dicke des Flächenelementes.

Die Flächenelemente können thermisch und/oder chemisch vorgespannt sein. Das Flächenelement kann dabei als Scheibe bzw. flächiges Element ausgestaltet bzw. als dieses bezeichnet werden.

Die Flächenelemente der Brandschutzsicherheitsverglasung können als Glasscheiben, insbesondere als Kalknatronglasscheibe, oder Acrylglasscheiben oder Ähnliches ausgebildet sein. Auch Keramikgläser oder spezielle gebogene Gläser können verwendet werden. Im Falle eines gebogenen Flächenelements sind natürlich die Flachseiten des Flächenelements gebogen und verlaufen parallel zueinander. Besonders günstig können thermisch oder eventuell chemisch vorgespannte Glasscheiben sein. Als Alternativen zu Glasscheiben auf Siliziumoxidbasis kommen auch transparente Träger auf Polymerbasis (bspw. aus Polycarbonaten oder PolyMethyl-Methacrylat (PMMA; Acrylglas), teilweise kristalline Gläser (Keramikgläser) oder Verbundsysteme mit Glasscheiben und Kunststoffträgern in Frage. Insbesondere kann das erste Flächenelement als Glasscheibe ausgebildet sein.

Die Brandschutzsicherheitsverglasung ist im Brandfall mindestens 20 Minuten, insbesondere mindestens 60 Minuten, raumabschliessend. Raumabschliessend bedeutet, dass im Brandfall weder Rauch noch Feuer auf die dem Feuer abgewandte Seite der Brandschutzsicherheitsverglasung, also beispielsweise ins Ruderhaus, auf die Brücke, ins Fahrzeug oder ins Gebäude, gelangt. Aufgrund der integrierten raumabschliessenden Eigenschaften kann die Crew, der Insasse bzw. der Bewohner im Brandfall alle notwendigen Manöver und Massnahmen einleiten.

Das elektrisch leitende Element kann im Wesentlichen transparent sein, so dass die Brandschutzsicherheitsverglasung im Wesentlichen transparent ausgebildet ist.

Das erste hoch vorgespannte Flächenelement kann eine Vorspannung von mindestens 180 MPa, insbesondere mindestens 200 MPa, insbesondere mindestens 210 MPa, aufweisen. Auch das zweite Flächenelement kann als hoch vorgespanntes Flächenelement ausgebildet sein und eine Vorspannung von mindestens 180 MPa, insbesondere mindestens 200 MPa, insbesondere mindestens 210 MPa, aufweisen.

Gemäss der Norm EN121250 (Stand: November 2000) haben handelsübliche vorgespannte Glasscheiben eine Vorspannung von 120 MPa. Solche Gläser werden jedoch nicht als hoch vorgespannte Gläser bezeichnet. Der Fachmann spricht von hoch vorgespannten Gläsern ab einer Vorspannung von mindestens 180 MPa.

Das zweite Flächenelement kann als vorgespanntes Flächenelement ausgebildet sein.

Die Brandschutzsicherheitsverglasung kann die raumabschliessenden Eigenschaften ohne eine im Brandfall aufschäumende und/oder eintrübende Brandschutzzwischenschicht oder ohne eine hydrogelbasierte Brandschutzzwischenschicht erreichen. Es ist daher möglich, dass die Brandschutzsicherheitsverglasung keine aufschäumende und/oder eintrübende Brandschutzzwischenschicht, beispielsweise auf Silikatbasis, oder keine hydrogelbasierte Brandschutzzwischenschicht aufweist. Mit anderen Worten: Die Brandschutzsicherheitsverglasung kann frei von einer Brandschutzzwischenschicht auf Silikatbasis und/oder Hydrogelbasis sein. Auf diese Weise kann eine besonders leichte Brandschutzsicherheitsverglasung bereitgestellt werden.

Die beiden Flächenelemente können mit einem Laminiermittel, insbesondere mit einer Laminierfolie, miteinander verbunden sein. Das Laminiermittel kann Polyvinylbutyral (PVB), Ethylenvinylacetat (EVA) und/oder Sentryglas plus® (SGP) und/oder Hartz und/oder ähnliche Verbundmaterialien aufweisen. Es ist auch möglich, dass mehrere Laminierfolien als Verbund das erste Flächenelement mit dem zweiten Flächenelement verkleben also monolitisch verbinden.

Die Brandschutzsicherheitsverglasung kann auch Verbundsicherheitsverglasung, Verbund-Sicherheitsglas oder Sicherheitsverbundglas genannt werden und stellt einen Verbund aus zwei Flächenelementen, also beispielsweise zwei Glasscheiben, dar. Die Brandschutzsicherheitsverglasung kann mehrere Sicherheitsmerkmale (u.a. Durchschlaghemmung, deutlich geringe Gefahr der Verletzung an Splittern, Einbruchhemmung usw.) gegenüber einem einfachen Flächenelement aufweisen. Weiterhin kann die Brandschutzsicherheitsverglasung eine deutlich höhere Schalldämmung aufweisen als ein einzelnes Flächenelement.

Im Autoklaven kann unter Hitze und Druck ein dauerhafter Verbund zwischen Flächenelementen und Laminiermittel, insbesondere Laminierfolie, geschaffen werden. Durch den dauerhaften, festen Verbund der Flächenelemente wird eine monolithische Verbundsicherheitsverglasung bzw. Brandschutzsicherheitsverglasung geschaffen. Es ist auch möglich dass die Flächenelemente durch mehrere Laminierfolien miteinander verbunden werden.

Das elektrisch leitende Element kann als Draht und/oder als elektrisch leitende Beschichtung, insbesondere als strukturierte Beschichtung, ausgebildet sein. Die Funktionsweise einer strukturierten elektrisch leitenden Beschichtung ist beispielsweise in WO 2013/178369 beschrieben. In dieser Hinsicht wir Bezug genommen auf die Anmeldung WO 2013/178369, deren Inhalt hiermit in diese Anmeldung aufgenommen wird.

Die elektrisch leitende Beschichtung kann als hard coating oder als soft coating ausgestaltet sein.

Die elektrisch leitende Beschichtung kann sowohl Silber, Gold, Kupfer, Indium, Zinn, Zink und/oder Gemische und/oder Oxide und/oder Legierungen davon, als auch TCO-Schichten (transparent conductive oxide) wie beispielsweise Indium-Zinn-Oxid (ITO) oder SnO₂:F aufweisen. Insbesondere kann die Beschichtung eine Silberbeschichtung mit einer oder mehreren Einzellagen Silber aufweisen. Um eine hohe Transparenz der Brandschutzsicherheitsverglasung zu gewährleisten kann eine Entspiegelung der Silberschicht erfolgen.

Das Verfahren zur Herstellung einer beheizbaren Brandschutzsicherheitsverglasung weist die folgenden Schritte auf:
- Bereitstellen von einem ersten, hoch vorgespannten Flächenelement und einem zweiten Flächenelement, wobei die beiden Flächenelemente je mit zwei im Wesentlichen parallelen Flachseiten ausgebildet sind,
- Aufbringen eines elektrisch leitenden Elements auf einer Flachseite des ersten Flächenelementes oder auf der Flachseite des zweiten Flächenelements,
- Verbinden der beiden Flächenelemente miteinander, wobei das leitende Element zwischen den beiden Flächenelementen angeordnet ist,
wobei die Brandschutzsicherheitsverglasung als monolithische Brandschutzsicherheitsverglasung ausgestaltet ist und im Brandfall mindestens 20 Minuten, insbesondere mindestens 60 Minuten, raumabschliessend ist.

Selbstverständlich ist die Reihenfolge der Verfahrensschritte nicht einschränken zu verstehen. Beispielsweise ist es möglich dass das elektrisch leitende Element vor dem Vorspannen auf die Flachseite des entsprechenden Flächenelements aufgebracht wird.

Die Brandschutzsicherheitsverglasung kann eine oben beschriebene Brandschutzsicherheitsverglasung sein. Auf diese Weise wird es möglich in wenigen Arbeitsschritten eine monolithische Verbundsicherheitsverglasung herzustellen, die zum einen beheizbar und zum anderen feuerresistent ist. Die feuerresistenten Eigenschaften der Brandschutzsicherheitsverglasung werden dabei nicht mit einer beheizbaren Brandschutzsicherheitsverglasung kombiniert. Vielmehr sind feuerresistente bzw. brandschützende Eigenschaften in die beheizbare Brandschutzsicherheitsverglasung integriert.

Vor dem Verbinden der beiden Flächenelemente können elektrische Anschlüsse, Busbars und/oder Sammelschienen am elektrisch leitenden Element angebracht werden.

Das elektrisch leitende Element kann als elektrisch leitende Beschichtung auf einer Flachseite des ersten Flächenelementes oder des zweiten Flächenelements aufgebracht werden.

Die elektrisch leitende Beschichtung kann flächig aufgebracht werden, wobei im Wesentlichen auf die gesamte Flachseite die Beschichtung aufgebracht werden kann. Insbesondere der Kantenbereich des Flächenelementes kann frei von einer Beschichtung sein. In die leitende Beschichtung kann ein Schnittmuster eingebracht werden. Das Schnittmuster kann beispielsweise mittels eines Lasers eingebracht werden.

Die elektrisch leitende Beschichtung kann dem Proszess den Laser scriben unterzogen werden. Dies kann vor und/oder nach dem Vorspannprozess erfolgen.

Es können Busbars und/oder Kabel an das elektrisch leitende Element angelötet werden.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Verglasung mit einer möglichen Kombination von Brandschutzund Heizfunktion;
- Figur 2: eine weitere mögliche Verglasungseinheit mit kombinierter Brandschutz- und Heizfunktion;
- Figur 3: eine beheizbare Brandschutzsicherheitsverglasung mit integrierter Brandschutz- und Heizfunktion;
- Figur 4: eine weitere beheizbare Brandschutzsicherheitsverglasung mit integrierter Brandschutz- und Heizfunktion.

Grundsätzlich sind in den Figuren gleiche Teile mit gleichen Bezugszeichen versehen.

Eine erfindungsgemässe, transparente und beheizbare Brandschutzsicherheitsverglasung 1 mit integrierten feuerresistenten Eigenschaften, wie beispielsweise Gewährleistung des Raumabschlusses für mindestens 20 Minuten, kann die im Folgenden erörterten Merkmal aufweisen:
Ein erstes hoch vorgespanntes Flächenelement 2 und ein zweites Flächenelement 3 mit je zwei im Wesentlichen parallelen Flachseiten. Mindestens das erste Flächenelement 2 weist eine hohe Vorspannung von mindestens 210 MPa auf. Auf einer Flachseite der ersten Flächenelementes 2 ist ein elektrisch leitendes Element 4 als elektrisch leitende Beschichtung mit zwei elektrischen Anschlüssen angeordnet. Das zweite Flächenelement 3 ist als vorgespannte Glasscheibe mit einer Vorspannung von 120 MPa ausgestaltet. Das erste Flächenelement 2 und das zweite Flächenelement 3 sind durch eine Laminierfolie aus Polyvinylbutyral (PVB) oder Sentryglas plus® (SGP) oder EVA oder Hartz oder ähnliches Verbundmaterial miteinander verbunden, wobei das elektrisch leitendes Element 4 zwischen dem ersten Flächenelement 2 und dem zweiten Flächenelement 3 angeordnet ist.

Die elektrisch leitende Beschichtung kann sowohl Silber, Gold, Kupfer, Indium, Zinn, Zink und/oder Gemische und/oder Oxide und/oder Legierungen davon, und/oder TCO-Schichten (transparent conductive oxide), wie beispielsweise Indium-Zinn-Oxid (ITO), SnO₂:F, aufweisen. Bevorzugt werden Silberbeschichtungen aus einer oder mehreren Einzellagen Silber eingesetzt. Um eine hohe Transparenz des Dünnschichtheizkörpers zu gewährleisten kann eine Entspiegelung der Silberschicht erfolgen.

Das erste Flächenelement 2 bildet zusammen mit dem zweiten Flächenelement 3 und dem dazwischen angeordneten elektrisch leitenden Element 4 eine monolithische Brandschutzsicherheitsverglasung 1, die im Brandfall mindestens 20 Minuten raumabschliessend ist.

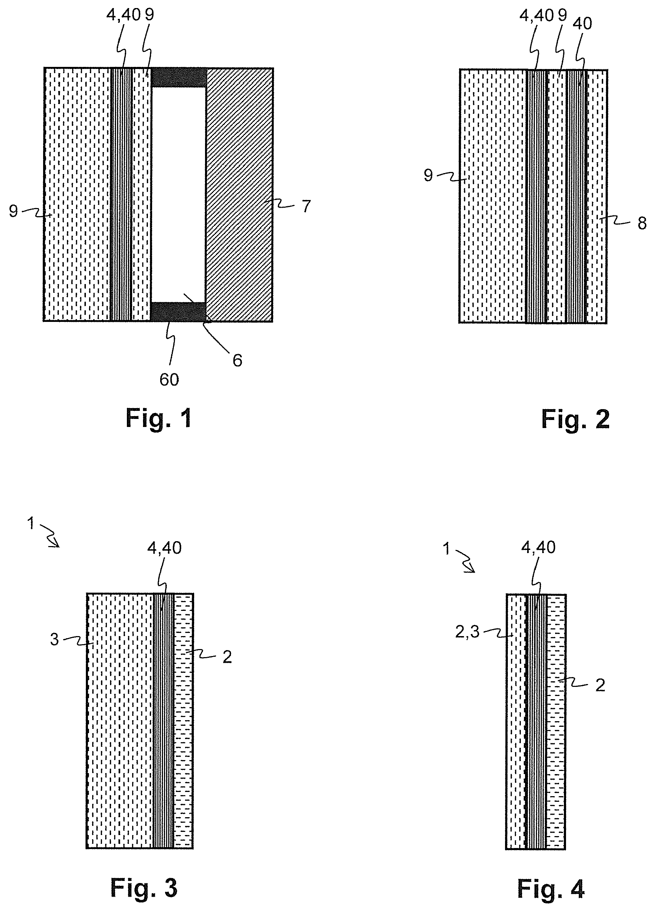

Die Figuren 1 und 2 zeigen je eine mögliche Kombination von Brandschutz- und Heizfunktion für eine Verglasung.

In Figur 1 ist eine beheizbare Brandschutzsicherheitsverglasung gezeigt, bei der eine beheizbare Verglasungseinheit zwei Glasscheiben 9 mit einem dazwischen angeordneten elektrisch leitenden Element 4, das als Draht ausgestaltet ist, aufweist. Die beiden nicht hoch vorgespannten Glasscheiben 9 sind über ein Laminiermittel 40 miteinander verbunden. Die beheizbare, aber nicht brandschützende Verglasungseinheit ist mit einem Brandschutzglas kombiniert. Bei dieser Kombination ist die beheizbare Verglasungseinheit mit einer Brandschutzverglasung 7 über einen Abstandhalter 60 verbunden. Die Brandschutzverglasung 7 weist zwei oder mehrere Glasscheiben auf zwischen denen eine Brandschutzzwischenschicht auf Silikat- oder Hydrogelbasis angeordnet ist (nicht explizit dargestellt). Diese Brandschutzzwischenschicht absorbiert im Brandfall Energie und schützt so die dem Feuer abgewandte Seite der Verglasung vor Schäden. Zwischen der beheizbaren Verglasungseinheit und der Brandschutzverglasung ist ein Scheibenzwischenraum 6 ausgebildet, der, beispielsweise mit Schutzgas gefüllt, eine zusätzliche Isolation ermöglicht. Eine solche Kombination aus einer beheizbaren Verglasungseinheit und einer Brandschutzverglasung ist jedoch dick und schwere.

Figur 2 weist dieselbe beheizbare Verglasungseinheit, wie Figur 1, mit zwei nicht hoch vorgespannten Glasscheiben 9 auf, zwischen denen ein elektrisch leitendes Element 4 als Draht angeordnet ist. Die beiden Glasscheiben 9 sind durch eine Laminierfolie 40 miteinander verbunden. Die beheizbare Verglasungseinheit ist über eine weitere Laminierfolie 40 mit einer zusätzlichen hoch vorspannten Glasscheibe 8 verbunden. Durch diese Kombination der beheizbaren Verglasungseinheit mit einen zusätzlichen hoch vorgespannten Glasscheiben 8 kann eine beheizbare Brandschutzeinheit bereit gestellt werden, die jedoch aufgrund der Vielzahl an Glasscheiben relativ schwer und dick ist und in mehreren aufwendigen Arbeitsschritten herstellt wird.

Figur 3 zeigt eine beheizbare Brandschutzsicherheitsverglasung 1 mit integrierter Brandschutz- und Heizfunktion. Auf ein hoch vorgespanntes, erstes Flächenelement 2 ist ein elektrisch leitendes Element 4 in Form einer elektrisch leitenden Beschichtung aufgebracht. Das erste Flächenelement 2 ist über ein Laminiermittel 40, das als Laminierfolie ausgestaltet ist, mit einem zweiten Flächenelement 3 monolithisch verbunden. Die so aufgebaute beheizbare Brandschutzsicherheitsverglasung 1 ist im Brandfall mindestens 20 Minuten raumabschiessend. Eine solche Brandschutzsicherheitsverglasung 1 ist relative dünn und damit auch relativ leicht, da sie keine zusätzliche Brandschutzzwischenschicht oder zusätzliche Glasscheibe enthält. Das hoch vorgespannte, erste Flächenelement 2 ist als Glasscheibe mit einer Vorspannung von mindestens 180 MPa ausgebildet und das zweite Flächenelement 3 ist als Glasscheibe mit einer handelsüblichen Vorspannung von 120 MPa ausgebildet.

Figur 4 zeigt einen ähnlichen Aufbau einer beheizbaren, monolithischen Brandschutzsicherheitsverglasung 1 wie Figur 3, bei der das zweite Flächenelement 3 auch hoch vorgespannt ist und somit als hoch vorgespanntes, erstes Flächenelement 2 ausgebildet ist. Das elektrisch leitende Element 4 in Form einer strukturierten elektrisch leitenden Beschichtung ist zwischen den beiden hoch vorgespannten Flächenelementen 2,3 anordnet die mit Hilfe einer Laminierfolie miteinander zu einem monolithischen Brandschutzsicherheitsverglasung 1 verbunden sind. Dadurch kann die Dicke und das Gewicht der beheizbaren Brandschutzsicherheitsverglasung 1 noch weiter reduziert werden.

## Patentansprüche

1. Beheizbare Brandschutzsicherheitsverglasung (1) mit Brandschutz- und Heizfunktion (1) für Marine-, Fahrzeug und/oder Bauanwendungen aufweisend ein erstes hoch vorgespanntes Flächenelement (2), ein zweites Flächenelement (3) und eine elektrisch leitendes Element (4),
wobei das erste hoch vorgespannte Flächenelement (2) und das zweite Flächenelement (3) je zwei im Wesentlichen parallele Flachseiten aufweisen, wobei das elektrisch leitende Element (4) auf einer Flachseite des ersten Flächenelements (2) oder auf einer Flachseite des zweiten Flächenelements (3) angeordnet ist,
wobei die Brandschutzsicherheitsverglasung (1) als monolithische Brandschutzsicherheitsverglasung (1) ausgestaltet ist und das elektrisch leitende Element (4) zwischen dem ersten Flächenelement (2) und dem zweiten Flächenelement (3) angeordnet ist,
wobei die Brandschutzsicherheitsverglasung (1) im Brandfall mindestens 20 Minuten, insbesondere mindestens 60 Minuten, raumabschliessend ist.

2. Brandschutzsicherheitsverglasung (1) gemäss dem vorherigen Anspruch, wobei das erste Flächenelement (2) und/oder das zweite Flächenelement (3) eine Vorspannung von mindestens 180 MPa, insbesondere mindestens 200 MPa, insbesondere mindestens 210 MPa, aufweist.

3. Brandschutzsicherheitsverglasung (1) gemäss einem der vorherigen Ansprüche, wobei die Brandschutzsicherheitsverglasung (1) frei von einer Brandschutzzwischenschicht auf Silikatbasis und/oder Hydrogelbasis ist.

4. Brandschutzsicherheitsverglasung (1) gemäss einem der vorherigen Ansprüche, wobei die beiden Flächenelemente (2, 3) mit einem Laminiermittel, insbesondere mit einer Laminierfolie, miteinander verbunden sind.

5. Brandschutzsicherheitsverglasung (1) gemäss Anspruch 4, wobei die Laminierfolie Polyvinylbutyral (PVB), Ethylenvinylacetat (EVA) und/oder Sentryglas plus® (SGP), und/oder Hartz und/oder ähnliche Verbundmaterialien aufweist

6. Brandschutzsicherheitsverglasung gemäss einem der vorherigen Ansprüche, wobei das elektrisch leitende Element (4) als Draht und/oder als elektrisch leitende Beschichtung, insbesondere als strukturierte Beschichtung, ausgebildet ist.

7. Brandschutzsicherheitsverglasung (1) gemäss einem der vorherigen Ansprüche, wobei das erste Flächenelement (2) und/oder das zweite Flächenelement (3) als Glasscheibe, insbesondere als Kalknatronglasscheibe ausgebildet ist.

8. Verfahren zur Herstellung einer beheizbaren Brandschutzsicherheitsverglasung (1) aufweisend folgende Schritte:
- Bereitstellen eines ersten, hoch vorgespannten Flächenelement (2) und eines zweiten Flächenelement (3), wobei die beiden Flächenelement (2) je mit zwei im Wesentlichen parallelen Flachseiten ausgebildet sind,
- Aufbringen eines elektrisch leitenden Elements (4) auf einer Flachseite des ersten Flächenelementes (2) oder des zweiten Flächenelements (3),
- Verbinden des ersten Flächenelementes (2) mit dem zweiten Flächenelement (3), wobei das leitende Element (4) zwischen dem ersten Flächenelement (3) und den zweiten Flächenelement (3) angeordnet ist,
wobei die Brandschutzsicherheitsverglasung (1) als monolithische Brandschutzsicherheitsverglasung (1) ausgestaltet ist und im Brandfall mindestens 20 Minuten, insbesondere mindestens 60 Minuten, raumabschliessend ist.

9. Verfahren gemäss Anspruch 8, wobei vor dem Verbinden der beiden Flächenelemente elektrische Anschlüsse, Busbars und/oder eine Sammelschiene am elektrisch leitenden Element (4) angebracht werden.

10. Verfahren gemäss einem der Ansprüche 8-9, wobei das elektrisch leitende Element (4) als leitende Beschichtung auf der Flachseite eines der beiden Flächenelemente (2,3) aufgebracht wird.

11. Verfahren gemäss Anspruch 10, wobei die Beschichtung flächig aufgebracht wird, insbesondere wobei in die leitende Beschichtung ein Schnittmuster, insbesondere mittels Laser, eingebracht wird.
